# EUROPEAN PATENT APPLICATION

(11) **EP 3 750 738 A1**
(43) Date of publication of application: **16.12.2020**
(21) Application number: 19425043.7
(22) Date of filing: 14.06.2019
(51) Int. Cl.: B60K 15/04

(54) **INLET ASSEMBLY FOR FUEL TANKS OF VEHICLES**

(71) Applicant: F.A.R.M.A. S.r.l. Fabbrica Accessori Ricambi Moto e Auto, 40059 Frazione Fossatone-Medicinia (BO) (IT)
(72) Inventor: Poma, Armando, 40060 Dozza BO (IT)
(74) Representative: Modiano, Micaela Nadia

(57) **Abstract**

An inlet assembly for fuel tanks of vehicles, which comprises a tubular main body (2), which defines an inner axial channel (3) and which is configured for installation on a vehicle, for the connection between a fuel tank thereof and the outside environment. The assembly (1) further comprises an outer conduit (4), arranged in communication with the channel (3) at a hole (5), which is provided along the lateral surface (2c) of the body (2).

The conduit (4) is coupled to the lateral surface (2c) of the body (2) so that it can be rotated, by the action of a user, in order to define a plurality of different configurations for use, which correspond to respective spatial orientations assumed by the conduit (4) and by an outlet (4a) of the conduit (4), opposite to the hole (5), with respect to the body (2).

## Description

The present invention relates to an inlet assembly for fuel tanks of vehicles.

As is known, in motor vehicles, access to the fuel tank is gained at an inlet assembly, or "filler neck", facing outward at a recess, usually provided on the side of the bodywork of the motor vehicle and usually closed by a flap.

In an embodiment that is now widely consolidated, the filler neck comprises a substantially tubular main body which defines a channel which is connected, at a first end, directly or indirectly with the fuel tank. At the other end, the filler neck is configured to receive the closure plug (and the refueling nozzle). Usually, inside the body a filter is arranged coaxially which, in addition to filtering out impurities and dirt, thus preventing them from reaching the fuel tank, also prevents the insertion of flexible tubes, which otherwise could be used by ill-intentioned individuals to attempt to steal fuel.

It should likewise be noted that the general structure described above is adopted not only in fuel tanks (of various types), but also in tanks for other substances used for the operation of the motor vehicle: one of these, for example, is the solution sold under the name ADBlue (which is a registered trademark), which is becoming increasingly widespread thanks to its ability to reduce emissions of nitrogen oxides in the exhaust gases of Diesel engines.

According to methods that are now consolidated, along the lateral surface of the main body a hole is likewise provided, which leads into the inner channel and from which, at the other end, a tube extends rigidly outward. Thus, the fuel (or in any case the substance destined for the tank) can exit from the tube when it rises up along the channel if the refueling continues after the tank has been filled completely, thus preventing the fuel from welling up from the outwardly-open end of the filler neck (or indeed from stagnating in the respective end portion), thus leading to inconvenience and potential hazards to the safety of the user.

Furthermore, the tube constitutes an escape route for air or other gases, thus preventing the pressure in the tank from exceeding the threshold level considered acceptable (when the stopper is arranged so as to close the filler neck).

More generally, also in other circumstances arising during the useful life of the vehicle, the tube is a useful venting valve for liquids or gas.

Such implementation solution has however some drawbacks.

The direction to which the substances are expelled from the tube is determined solely by the shape and by the orientation of the latter, which in turn is anchored to the main body. By contrast, the filler neck is often located in confined spaces, between components whose arrangement can vary appreciably from vehicle to vehicle. Even the inclination assumed by the filler neck is not constant, from model to model of motor vehicle. Therefore, it often happens that the placement and the inclination of the tube are not compatible with the available spaces and, especially, they direct the substances expelled from the tube toward an area in which they are not wanted.

The aim of the present invention is to solve the above mentioned problems, by providing an inlet assembly provided with adapted contrivances for discharging excess fuel or other fluids, which is versatile and therefore positively installable on various different types of vehicles.

Within this aim, an object of the invention is to provide an inlet assembly, provided with adapted contrivances for discharging excess fuel or other fluids, which can be positively installed independently of the constraints imposed by the surrounding structures.

Another object of the invention is to provide an inlet assembly that ensures practical methods of choosing the area toward which to direct the discharge of excess fuel and other fluids.

Another object of the invention is to provide an inlet assembly that ensures a high reliability of operation.

Another object of the invention is to provide an inlet assembly that presents an alternative technical and structural architecture to those of conventional assemblies.

Another object of the invention is to provide an assembly that is of low cost and is safely applied.

Another object of the invention is to provide an assembly that can be easily implemented using elements and materials that are readily available on the market.

This aim and these and other objects which will become better apparent hereinafter are achieved by an inlet assembly for fuel tanks of vehicles, which comprises a tubular main body, which defines an inner axial channel and is configured for installation on a vehicle for the connection between a fuel tank of the vehicle and the outside environment, and an outer conduit, arranged in communication with said channel at a hole, which is provided along the lateral surface of said body, characterized in that said conduit is coupled to said lateral surface of said body so that it can be rotated, by the action of a user, in order to define a plurality of different configurations for use, which correspond to respective spatial orientations assumed by said conduit and by an outlet of said conduit, opposite from said hole, with respect to said body.

Further characteristics and advantages of the invention will become better apparent from the description of a preferred, but not exclusive, embodiment of the inlet assembly according to the invention, which is illustrated by way of non-limiting example in the accompanying drawings wherein:
Figure 1 is a partially exploded perspective view of the inlet assembly according to the invention;

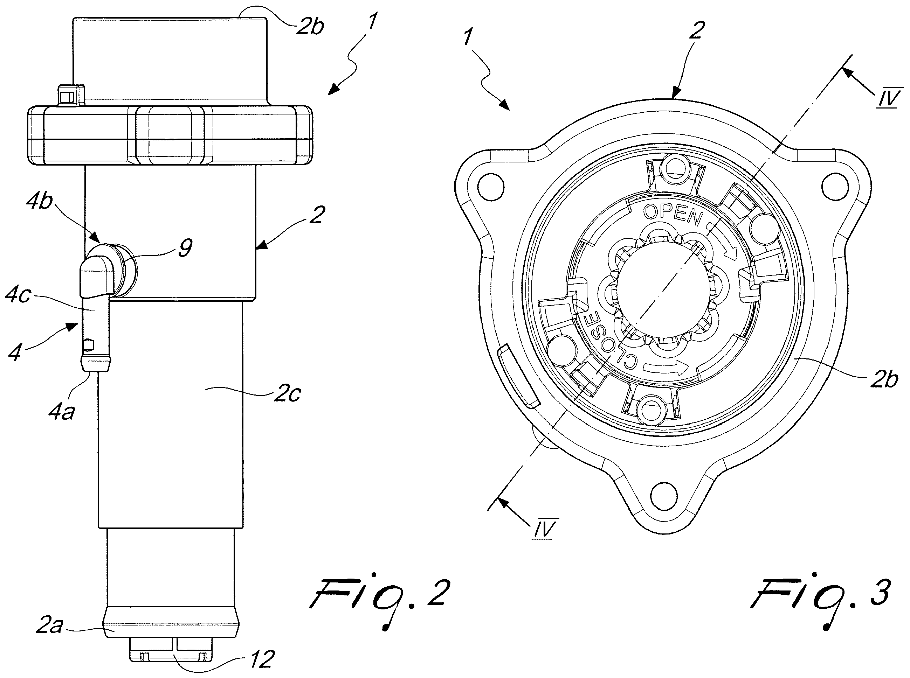

Figure 2 is a front elevation view of the inlet assembly in Figure 1;
Figure 3 is a view from above of the inlet assembly in Figure 1;

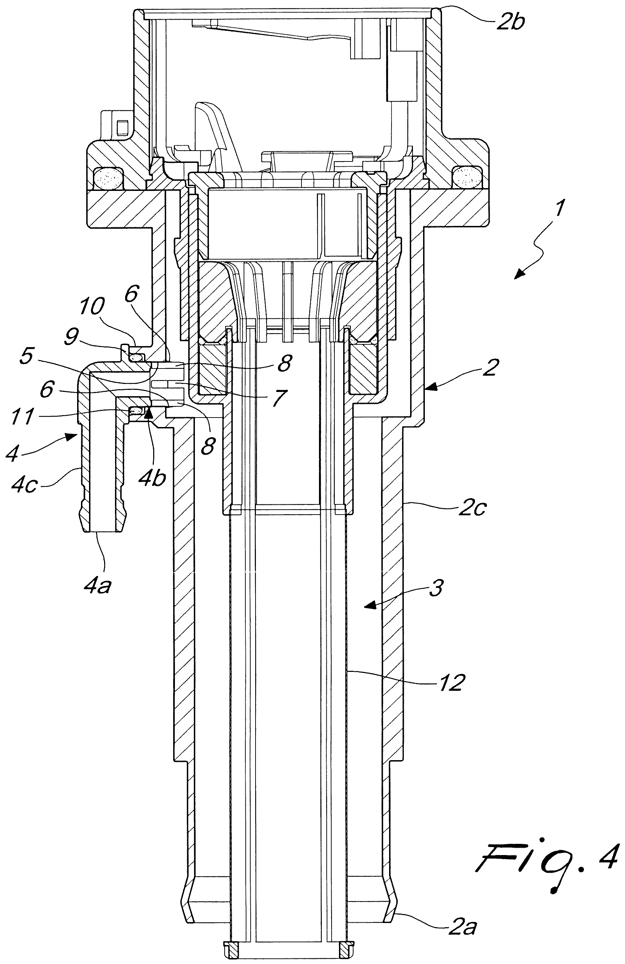

Figure 4 is a cross-sectional view of Figure 3, taken along the line IV-IV;

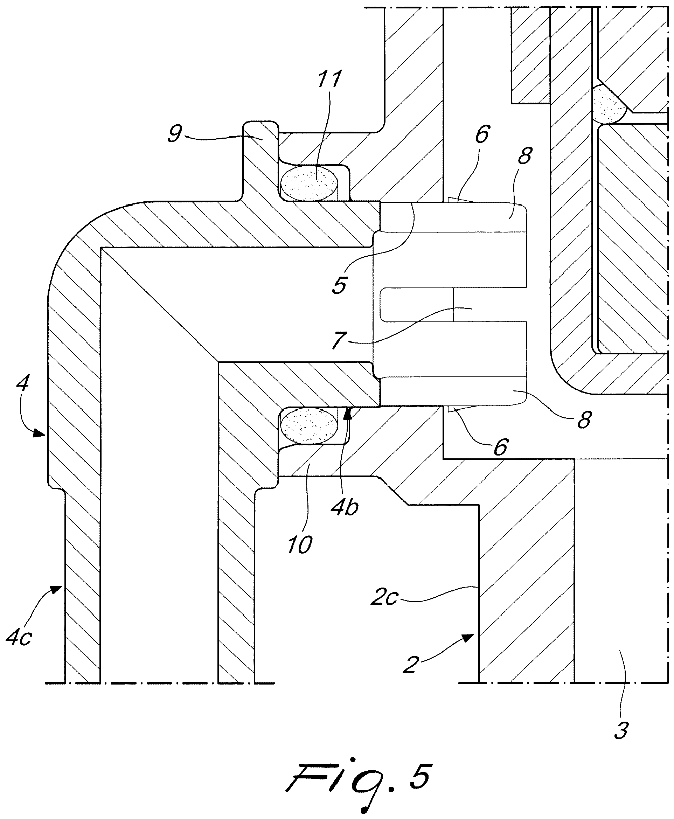

Figure 5 is a greatly enlarged detail of Figure 4.

With particular reference to the figures, the reference numeral 1 generally designates an inlet assembly for fuel tanks of vehicles.

It should be noted from this point onward that the assembly 1 can have application in vehicles of any kind, but preferably it is intended for use in motor vehicles such as cars or, even more, such as trucks, semi-trailer trucks, articulated vehicles, vans and other motor vehicles for professional use, and on earth movement machines, agricultural machinery or the like.

Furthermore, the tank with which the assembly 1 will be associated is typically the fuel tank (for any kind of fuel), but it can also be a tank for other substances, also used for the operation of the vehicle. For example in fact, the assembly 1 can also validly have application with tanks of ADBlue®.

In any case, the assembly 1 comprises a tubular main body 2, which defines an inner axial channel 3 and which is configured to be installed on a vehicle, in order to establish the connection between a fuel tank of the latter and the outside environment.

The assembly 1 is therefore (typically but not exclusively) a filler neck: a first end 2a of the body 2 is directed toward the fuel tank and connected directly or indirectly thereto, while at the other end the second end 2a of the body 2 faces outward, typically from a recess located on the side of the vehicle.

The second end 2b (usually closed by a stopper) is configured to receive the refueling nozzle, which is partially inserted into the channel 3 in order to send fuel (or other designated substance) into the tank.

According to the specific applicative requirements, the body 2 can be made in a single block or be composed of two or more separate portions (as in the accompanying figures), which are mutually coupled with sealing along respective edges that are mutually in contact.

The assembly 1 also comprises an outer conduit 4, which is arranged in communication with the channel 3 at a hole 5, which is provided along the lateral surface 2c of the body 2.

Thus, if the fuel or other substance rises back up along the channel 3 up to the hole 5 (for example during refueling), it is expelled through the latter and the conduit 4; this prevents the fuel from welling up from the first end 2a or indeed from stagnating in the adjacent area (where typically the channel 3 has a widened transverse cross-section in order to allow the insertion of the nozzle). Likewise, the hole 5 allows the venting of air, or other gases/fluids, for example when the stopper is arranged in the configuration for closing the channel 3, and this prevents excessive pressures from building up inside the tank. More generally, and according to methods that are known per se, the hole 5 with the conduit 4 constitutes a form of venting valve, which is useful in various different circumstances.

According to the invention, the conduit 4 is coupled to the lateral surface 2c of the body 2 so that it can be rotated, by the action of a user (i.e., the rotation can happen following user intervention). Thus, for the assembly 1 a plurality of different configurations for use are defined, which correspond to respective spatial orientations assumed by the conduit 4 and by an outlet 4a thereof, opposite to the hole 5, with respect to the body 2.

This achieves the set aim from this point onward, in that by rotating the conduit 4 (while keeping the body 2 fixed, whose position is usually imposed uniquely) the user can vary at will the direction of expulsion of liquids and gases from the conduit 4 (and the placement thereof), and this makes it possible to easily adapt to the spatial constraints present in the vehicle (and therefore to the position and/or to the orientation imposed on the body 2), while still being able to choose the direction and the discharge area deemed most appropriate in each instance.

So that the rotation of the conduit 4 with respect to the body 2 can vary the position of the outlet 4a, obviously the conduit 4 is contoured so that the latter is not aligned with the hole 5. In other words, the conduit 4 has a shape structure such that its outlet 4a is arranged on an inclined plane that is preferably at right angles with respect to the plane on which its inlet lies, which mates with the hole 5 at the other end.

It should be noted that any shape structure of the conduit 4 that meets the aforementioned requirement is to be considered covered in the scope of protection claimed herein.

In an embodiment of significant practical interest, illustrated in the accompanying figures for the purposes of non-limiting example of application of the invention, the conduit 4 is L-shaped. The conduit 4 thus defines a first section 4b, which is at right angles to the axis of the main body 2 and coupled rotatably to the lateral surface 2c of the latter, and a second section 4c, which is at right angles to and preferably longer than the first section 4b. So in fact, the conduit 4 is connected to the body 2 (to the hole 5) at the first section 4b, while the outlet 4a is defined on the second section 4c.

In the preferred, non-limiting embodiment of the invention, an end portion of the conduit 4 (which is part of the first section 4b and which has the inlet), which has a substantially circular transverse cross-section, is inserted so that it can rotate into the hole 5, which has a circular cross-section complementary to that of the end portion. The conduit 4 and the body 2 (the hole 5) define a rotary pair with the possibility for the conduit 4 to freely rotate about the axis of the hole 5.

It should be noted that in the preferred solution the dimensions of the conduit 4 (of the transverse cross-section of the end portion and of the first section 4b) and of the hole 5 eliminate any play so that, once the coupling is made (which occurs therefore preferably by interference fit), the rotation can occur only by the action of the user (be it the installation technician or another person). The possibility is not ruled out however of using other specific contrivances to make it so that the rotation of the conduit 4 can occur only as a consequence of direct intervention of the installation technician/user.

With further reference to the preferred, but not exclusive, embodiment, the conduit 4 is provided with at least one retention tooth 6, which protrudes externally from the end portion in order to engage against the edge of the hole 5 and prevent the extraction of the conduit 4.

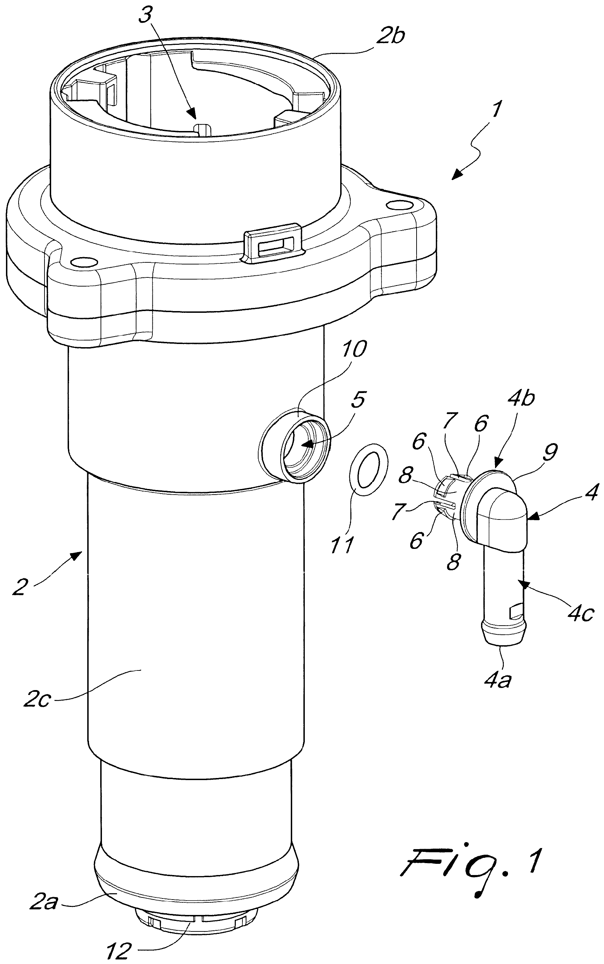

In particular, and as can also be seen in Figure 1 for example, the assembly 1 comprises a plurality of teeth 6, which are distributed about the axis of the hole 5 and which protrude externally from the end portion. This ensures a more stable coupling and a more effective prevention of extraction.

Even more specifically, and with further reference to the preferred, but not exclusive, embodiment, the end portion is provided with a plurality of longitudinal notches 7, which define respective end flaps 8 which have the property of elastic oscillation. A respective retention tooth 6 protrudes from each end flap 8 (or at least from some of them).

In the assembly step therefore, the first section 4b of the conduit 4 is inserted with its end portion into the hole 5; in this step the flaps 8 are bent inward by elastic deformation, returning to the non-deformed configuration (aligned with the rest of the first section 4b) when the teeth 6 slide past the hole 5. In such situation, the teeth 6 protrude from the transverse space occupation of the end portion and oppose to extraction, in that they tend to abut against the edge of the hole 5. It should be noted that the dimensioning can be chosen such that, in use, the teeth 6 are kept constantly resting against the hole 5 or it can be arranged so that when insertion is complete the teeth 6 are slightly spaced apart from the hole 5, and will rest and abut against its edge only if a stress tends to pull out the conduit 4.

It should be noted that other embodiments are not ruled out of the rotatable coupling between the conduit 4 and the body 2 (hole 5), which in any case remain within the scope of protection claimed herein.

Conveniently, the first section 4b is provided externally with a transverse stop plate 9, which is kept resting against a collar 10 which protrudes externally around the hole 5. The plate 9, cooperating with the collar 10, thus defines a stroke limit for the insertion of the end portion of the conduit 4 (of the first section 4b) into the hole 5.

Advantageously, the assembly 1 comprises at least one sealing element 11, which is interposed between the conduit 4 and the body 2, in order to block any seepage of substances expelled from the channel 3 through the hole 5 and so ensure their correct conveyance toward the outlet 4a.

In particular, in the embodiment illustrated in the accompanying figures for the purposes of non-limiting example of the scope of application of the invention, the sealing element 11 is constituted by an O-ring, which is interposed between the first section 4b of the conduit 4 and the collar 10. In such context, the ring 9 protects and completely conceals from view the sealing element 11, defining for the latter a seat that is closed and inaccessible from outside, preventing contact with substances or impurities from outside, which otherwise could damage or deteriorate it in some way.

Conveniently, the assembly 1 comprises a tubular filter 12, which is arranged coaxially inside the main body 2, in order to allow the passage of fluids (during refueling for example) and, by contrast, to obstruct the passage of solid particles of greater dimensions than a predefined threshold value (so preventing them from reaching the tank). Such particles (impurities, dirt, powder, contaminant agents of various kinds) can for example be carried by the fuel or be introduced into the body 2 from the outside environment when the user removes the stopper in order to proceed with the refueling. The filter 12 (which can comprise a metal mesh that constitutes in whole or in part its lateral walls and the bottom wall, directed toward the tank) further performs the function of preventing the introduction of flexible tubes, which otherwise could be used to steal fuel from the tank.

Operation of the inlet assembly has effectively already been explained in the foregoing pages, but a brief summary is given below in any case.

The body 2 is installed in a vehicle in order to allow the refueling of fuel or in any case to connect a tank with the outside environment. In such context, the hole 5 and the conduit 4 operate as a venting valve, by expelling outside (at the outlet 4a) a liquid that rises up along the channel 3 (or excess gas).

The peculiar choice of mating the conduit 4 to the body 2 so that it can rotate (by action of the user) makes it possible to vary at will the position of the conduit 4 (while keeping the body 2 fixed, as its placement is usually imposed uniquely) and therefore the position of the outlet 4a, therefore ensuring the possibility to freely choose the direction and area for discharging liquids and gases. This makes it possible to find adequate placement for the conduit 4 even in the presence of major constraints caused by the presence of surrounding structures and elements and/or it makes it possible to choose the discharge area deemed most appropriate, for example avoiding having the fuel expelled from the conduit 4 come into contact with hot elements or in any case with potentially inflammable structures.

The rotatable coupling therefore ensures maximum versatility for the assembly 1, which can be positively installed on different types of vehicles independently of the constraints imposed by the surrounding structures, and allowing maximum freedom of choice as to the area toward which to direct the discharge of excess fuel and other fluids.

The choice to implement the coupling by way of one or more teeth 6 that protrude from the end portion intended to be inserted into the hole 5 (and to protrude into the channel 3) is found in such context to be of particular practical interest, in that the rotatable coupling is carried out with a simple maneuver by the installation technician (who in fact has only to insert the end portion, thus causing the elastic deformation of the flaps 8).

After insertion in fact, the teeth 6 return to the non-deformed configuration, in which they oppose to extraction (but leave the conduit 4 free to rotate with respect to the hole 5).

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be substituted with other, different characteristics, existing in other embodiments.

In practice, the materials employed, as well as the dimensions, may be any according to requirements and to the state of the art.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. An inlet assembly for fuel tanks of vehicles, which comprises a tubular main body (2), which defines an inner axial channel (3) and is configured for installation on a vehicle for the connection between a fuel tank of the vehicle and the outside environment, and an outer conduit (4), arranged in communication with said channel (3) at a hole (5), which is provided along the lateral surface (2c) of said body (2), **characterized in that** said conduit (4) is coupled to said lateral surface (2c) of said body (2) so that it can be rotated, by the action of a user, in order to define a plurality of different configurations for use, which correspond to respective spatial orientations assumed by said conduit (4) and by an outlet (4a) of said conduit (4), opposite from said hole (5), with respect to said body (2).

2. The inlet assembly according to claim 1, **characterized in that** said conduit (4) is L-shaped, in order to define a first section (4b), which is at right angles to the axis of said main body (2) and coupled rotatably to said lateral surface (2c), and a second section (4c), which is at right angles to and preferably longer than said first section (4b).

3. The inlet assembly according to claim 1 or 2, **characterized in that** an end portion of said conduit (4), with a substantially circular transverse cross-section, is inserted so that it can rotate into said hole (5), with a circular cross-section complementary to that of said end portion, said conduit (4) and said body (2) defining a rotary pair with the possibility for said conduit (4) to rotate freely about the axis of said hole (5).

4. The inlet assembly according to claim 3, **characterized in that** said conduit (4) has at least one retention tooth (6), which protrudes externally from said end portion for engaging against the edge of said hole (5) and preventing the extraction of said conduit (4).

5. The inlet assembly according to claim 4, **characterized in that** it comprises a plurality of said teeth (6), which are distributed about the axis of said hole (5) and which protrude externally from said end portion.

6. The inlet assembly according to claim 5, **characterized in that** said end portion is provided with a plurality of longitudinal notches (7), in order to define respective end flaps (8) which have the property of elastic oscillation, a respective retention tooth (6) protruding from each one of said end flaps (8).

7. The inlet assembly according to one or more of the preceding claims, **characterized in that** said first section (4b) is provided externally with a transverse stop plate (9), which is kept resting against a collar (10) protruding externally around said hole (5), in order to define a stroke limit for the insertion of said end portion into said hole (5).

8. The inlet assembly according to one or more of the preceding claims, **characterized in that** it comprises at least one sealing element (11), which is interposed between said conduit (4) and said body (2), to block the seepage of substances expelled from said channel (3) through said hole (5) and to ensure their correct conveyance toward said outlet (4a).

9. The inlet assembly according to claim 8, **characterized in that** said sealing element (11) is constituted by an O-ring, interposed between said first section (4b) and said collar (10).

10. The inlet assembly according to one or more of the preceding claims, **characterized in that** it comprises a tubular filter (12), arranged coaxially inside said main body (2), to allow the passage of fluids and to obstruct the passage of solid particles of greater dimensions than a predefined threshold value.
